# EUROPÄISCHE PATENTANMELDUNG

(11) **EP 4 198 867 A1**
(43) Veröffentlichungstag der Anmeldung: **21.06.2023**
(21) Anmeldenummer: 21000356.2
(22) Anmeldetag: 15.12.2021
(51) Int. Cl.: G06Q 50/18, G06Q 30/00, G06Q 10/10

(54) **VERFAHREN ZUR FRISTGERECHTEN BEZAHLUNG VON AUFRECHTERHALTUNGSGEBÜHREN FÜR GEWERBLICHE SCHUTZRECHTE UNTER VERWENDUNG EINER VARIABLEN INDEXSTRUKTUR**

(71) Anmelder: IP ai sign UG, 45133 Essen (DE)
(72) Erfinder: Bendele, Tanja, 45133 Essen (DE)

(57) **Zusammenfassung**

Computer-implementiertes Verfahren zur fristgerechten Bezahlung von Aufrechterhaltungsgebühren für gewerbliche Schutzrechte für einen Anwender, in welchem Registerdaten zu mindestens einem gewerblichen Schutzrecht bei mindestens einer offiziellen Datenbank unter Verwendung einer variablen Indexstruktur abgefragt und diesen Informationen betreffend die Aufrechterhaltung des mindestens einen gewerblichen Schutzrechts entnommen werden, sowie ein System und ein Computerprogrammprodukt zur Ausführung der Schritte des Verfahrens.

## Beschreibung

Gegenstand der Erfindung ist ein Computer-implementiertes Verfahren zur fristgerechten Bezahlung von Aufrechterhaltungsgebühren für gewerbliche Schutzrechte, insbesondere für einen Anwender, in welchem Registerdaten, insbesondere umfassend die Fälligkeit der Aufrechterhaltungsgebühren, zu mindestens einem gewerblichen Schutzrecht bei mindestens einer offiziellen Datenbank unter Verwendung einer variablen Indexstruktur abgefragt und diesen Informationen betreffend die Aufrechterhaltung des mindestens einen gewerblichen Schutzrechts, insbesondere umfassend die Frist und optional die Nachfrist zur Zahlung der Aufrechterhaltungsgebühren, entnommen werden. Ferner ist Gegenstand der Erfindung ein System und ein Computerprogrammprodukt zur Ausführung der Schritte des Verfahrens.

In den letzten Jahren haben sich insbesondere im Zusammenhang mit dem Online-Shopping Systeme etabliert, um dem Anwender die Bezahlung seiner getätigten Transaktionen zu erleichtern. Beispielsweise offenbart US10387882B2 ein Computer-implementiertes Verfahren, in welchem Transaktions-bezogene Daten von einem ersten Computergerät empfangen und bestätigt werden und sodann eine Reihe von Zahlungsmöglichkeiten an ein zweiten Computergerät übermittelt wird, mittels dessen ein Anwender eine Zahlungsmöglichkeit auswählt und der Abschluss der Transaktion dem ersten Computergerät mitgeteilt wird.

Im Bereich des gewerblichen Rechtschutzes existieren solche simplen Bezahlsysteme bislang nicht. Dies ist insbesondere darauf zurückzuführen, dass hierfür eine strenge Fristenüberwachung in enger Abstimmung mit den offiziellen Datenbanken der Patent- und Markenämter erforderlich ist. Aus diesem Grund wurde die damit einhergehende Verantwortung bisher in der Regel in die Hände der zuständigen Vertreter aus dem gewerblichen Rechtsschutz gelegt.

Es besteht daher Bedarf an einem Bezahlsystem, das es einem Anwender ermöglicht, die Aufrechterhaltungsgebühren für seine gewerblichen Schutzrechte wie Patente, Gebrauchsmuster, ergänzende Schutzzertifikate, Marken und/oder Designs, fristgerecht selbstständig zu zahlen, insbesondere mittels einer 1-Klick-Option. Dabei soll der Anwender über bevorstehenden Fristabläufe informiert und zum Tätigwerden angeregt werden.

Der vorliegenden Erfindung liegt daher die Aufgabe zu Grunde, ein Verfahren zur fristgerechten Bezahlung von Aufrechterhaltungsgebühren für gewerbliche Schutzrechte bereitzustellen, in welchem eine regelmäßige Datenbankabfrage bei den betreffenden Patentund Markenämtern erfolgt und anschließend entsprechende Zahlungsmöglichkeiten für den Anwender bereitstellt werden. Insbesondere sollte ein Computer-implementiertes Verfahren sowie ein zugehöriges System und ein entsprechendes Computerprogrammprodukt entwickelt werden, welches den gesamten Vorgang der Aufrechterhaltung gewerblicher Schutzrechte von der Datenbankabfrage über die Fristenberechnung bis hin zur Anweisung der Bezahlung vereinfacht und strafft. Darüber hinaus sollte ein Computer-implementiertes Verfahren sowie ein zugehöriges System und ein entsprechendes Computerprogrammprodukt bereitgestellt werden, mit dem für einen Anwender die Bezahlung von Aufrechterhaltungsgebühren für seine gewerblichen Schutzrechte mittels digitaler Zustimmung, insbesondere 1-Klick-Zustimmung, ermöglicht wird. Insbesondere soll das System die Zahlung durch einen ungeübten Anwender ermöglichen, der sich keine dauerhafte Beratung durch Fachleute leisten kann.

Die Aufgabe der Erfindung wird gelöst durch ein Verfahren gemäß Anspruch 1 sowie durch ein System und ein Computerprogrammprodukt zur Ausführung der Schritte des Verfahrens nach Anspruch 11 bzw. 15. Ausführungsformen der Erfindung sind in den Unteransprüchen sowie in der Beschreibung detailliert offenbart.

Erfindungsgemäß wird die Aufgabe der vorliegenden Erfindung dadurch gelöst, dass Registerdaten zu mindestens einem gewerblichen Schutzrecht eines Anwenders unter Verwendung einer variablen Indexstruktur abgefragt, den Registerdaten Informationen betreffend die Aufrechterhaltung des mindestens einen gewerblichen Schutzrechts entnommen und diese Informationen an den Anwender übermittelt werden, sodass nach Auswahl des Anwenders aus einer Reihe von Zahlungsmöglichkeiten die Zahlung der Aufrechterhaltungsgebühren für das mindestens eine gewerbliche Schutzrecht angewiesen werden kann. Dabei beinhaltet das Verfahren auch die Berechnung der jeweils geltenden Zahlungsfrist unter Berücksichtigung der entsprechend zugrundeliegenden Konventionen im Hinblick auf eine fristgerechte Bezahlung oder aber eine Bezahlung innerhalb der Nachfrist.

Durch die Verwendung der variablen Indexstruktur können die Registerdaten aus den Datenbanken sämtlicher Patent- und Markenämter weltweit zielgerichtet abgefragt werden, das sich die variable Indexstruktur an die unterschiedliche Organisation der verschiedenen Datenbanken anpasst. Dies betrifft insbesondere den Datenbankeintrag zur Fälligkeit der Aufrechterhaltungsgebühren für das mindestens eine gewerblich Schutzrecht.

Soweit im Rahmen der vorliegenden Erfindung von gewerblichen Schutzrechten, insbesondere Patenten und/oder Marken, gesprochen wird, sind ebenso die Anmeldungen gewerblicher Schutzrechte (Schutzrechtsanmeldungen), insbesondere Patentanmeldungen und/oder Markenanmeldung, gemeint. Der Begriff gewerbliches Schutzrecht eines Anwenders umfasst daher jegliche gewerbliche Schutzrechte, für die der Anwender Anmelder und/oder Inhaber ist.

Die erfindungsgemäße Lösung erlaubt eine flexible weltweite Datenabfrage in Registern der Patent- und Markenämter, optional mitsamt Überprüfung von Anmelder und/oder Inhaber und/oder Anmelde- und/oder Publikationsnummer und/oder Nummern von erteilen Schutzrechten. Auf diese Weise findet vorzugsweise eine Mehrfaktorauthentifizierung der Schutzrechte statt. Bevorzugt umfasst die Mehrfaktorauthentifizierung die Überprüfung von Anmeldenummer und Publikationsnummer des mindestens einen Schutzrechtes. Anschließend sieht die erfindungsgemäße Lösung vor, dass ein Speichern in einer eigenen Datenbank, die insbesondere keine offizielle, also eine nicht-offizielle Datenbank ist, erfolgt. Gleichzeit kann ein Abgleich mit den Feldern in der Datenbank stattfinden. Es kann demnach also ein neuer Datenbankeintrag mit einer neu berechneten Fälligkeit erstellt werden, welcher optional mit der neuen Fälligkeit gemäß dem Register abgeglichen wird. Ein umgekehrter Abgleich ist ebenso möglich, was zu einer sogenannten Kreuzverifikation führt.

Sodann sieh die erfindungsgemäße Lösung vor, dass eine Nachricht an den Anwender mit der Aufforderung zur Vergabe eines Zahlungsauftrags versandt wird. Der Anwender kann dabei vorzugsweise zwischen Ja und Nein wählen und somit eine 1-Klick-Auswahl treffen. Sobald der Anwender seine Auswahl getroffen hat, wird im Sinne der erfindungsgemäßen Lösung ein Zahlungsdienstleister zur Zahlung der Gebühren an das betreffende Patent- und/oder Markenamt beauftragt, wobei optional in dem Verfahren eine eventuell berechnete Vorfälligkeit für die Zahlung and die Bank ggf. 10 Tage vor Fälligkeit oder 20 Tage automatisiert, insbesondere einen Algorithmus, berechnet wird. Als Tage gelten vorzugsweise alle Tage eines Jahres ohne Berücksichtigung von Werktagen, Feiertagen und/oder Tagen an den die Ämter geschlossen haben.

Eine Frist ist eine Zeitspanne von festgelegter Dauer, die ausgehend von einem maßgebenden Ereignis nach vollen Tagen, Wochen, Monaten oder Jahren berechnet wird und innerhalb deren eine Handlung gegenüber einem Amt, insbesondere einem Amt mit einer offiziellen Datenbank, vorzunehmen ist. Fälligkeit und Nachfristen werden verstanden, wie ein Fachmann/Fachfrau dies im Gebiet des Gewerblichen Rechtschutzes versteht.

In diesem Zusammenhang kann es im Rahmen der erfindungsgemäßen Lösung vorgesehen sein, dass der Zahlungsauftrag bereits alle Bankdaten, Codes, Anmeldenummer, Publikationsnummer, die Summe der Aufrechterhaltungsgebühr(en) und optional Zahlungscodes etc. enthält. Vorzugsweise wird im Schritt IV) vor Erhalt der Auswahl des Anwenders der Zahlungsauftrag automatisch mit den zur fristgerechten Bezahlung der Aufrechterhaltungsgebühr des mindestens einen Schutzrechtes notwendigen Bankdaten, Codes, Nummer, wie Anmeldenummer und/oder Publikationsnummer sowie der Summe der Aufrechterhaltungsgebühr bereitgestellt. Besonders bevorzugt wird, insbesondere dem Anwender, der Zahlungsauftrag zusammen mit einem Registerauszug des betreffenden mindestens einen Schutzrechtes und optional mit aktuell publizierten Bankdaten, insbesondere im Internet, des die offizielle Datenbank führenden Amtes auf einem Ausgabegerät dargestellt, insbesondere erfolgt die Darstellung auf dem Ausgabegerät nebeneinander. Durch diese Darstellung ist dem Anwender eine unmittelbare Überprüfung des Zahlungsauftrages möglich. Optional kann der Erhalt des Zahlungsauftrags und/oder der Eingang der Zahlung (Gutschrift) bestätigt werden. Der Zahlungsauftrag kann auch für eine Mehrzahl an Schutzrechten automatisch erstellt werden. Bevorzugt wird der Zahlungsauftrag mit einem individuellen Schlüssel versehen und optional wird der Zahlungsauftrag durch eine Bestätigung versehen mit dem individuellen Schlüssel bestätigt. Der individuelle Schlüssel ist vorzugsweise jeweils ein elektronischer individueller Schlüssel.

Darüber hinaus kann es im Rahmen der erfindungsgemäßen Lösung bevorzugt sein, wenn die betreffenden Registerdaten regelmäßig - flexibel - abgefragt werden, da alle Datenbanken unterschiedlich aufgebaut sind. Insbesondere erfolgt dabei sowohl eine Abfrage der Frist als auch eine Prüfung auf eine Änderung der Frist. Hierzu kann ein hinterlegter Algorithmus verwendet werden, wie x + 365 Tage (Patent), + 5 Jahre (Design) oder + 10 Jahre (Marke). Überdies müssen, beispielsweise in den USA, länderspezifische Regelungen berücksichtigt werden.

Besonders bevorzugt sieht die erfindungsgemäße Lösung zu Beginn oder alternativ oder zusätzlich am Ende des Computer-implementierten Verfahrens vor, dass ein elektronisches fälschungssicheres Dokument des Registers erstellt wird, um den Rechtsstand des betreffenden gewerblichen Schutzrechts jederzeit belegen zu können.

Die abgefragten Registerdaten können sämtliche in den betreffenden Registern der Patentund Markenämter zur Verfügung stehenden Daten eines gewerblichen Schutzrechts, insbesondere eines Patents, eines Gebrauchsmusters, eines ergänzenden Schutzzertifikats, einer Marke und/oder eines Designs, umfassen. Dabei sind insbesondere Daten zum Status und zur Fälligkeit der Aufrechterhaltungsgebühren für das gewerbliche Schutzrecht interessant. Weiterhin können Identifikationsdaten wie Titel, Anmelder/Inhaber, Vertreter, Anmeldenummer/Publikationsnummer usw. abgefragt werden. Gleichfalls umfassen die Registerdaten insbesondere ID-Nummern der offiziellen Datenbanken.

Die hierfür verwendete Indexstruktur ist insofern variabel, dass sie für jede zu durchsuchende Datenbank verschiedene Indizes umfasst, mittels derer die Position der betreffenden Daten in der jeweiligen Datenbank bestimmbar ist. Beispielsweise können in der Datenbank des Deutschen Patent- und Markenamtes (DPMA) die folgenden Positionen betrachtet werden.

**Patente, Gebrauchsmuster, ergänzende Schutzzertifikate (sowie Topographien):**

| INID-Code | Patent | Gebrauchsmuster | ergänzendes Schutzzertifikat |
|---|---|---|---|
| 21 | Aktenzeichen DE (Nationales Aktenzeichen des DPMA) | | |
| 96 | Aktenzeichen EP (Aktenzeichen des EPA) | | |
| 97 | Veröffentlichungsnummer EP | | |
| 86 | Aktenzeichen WO (Aktenzeichen der WIPO) | | |
| 87 | Veröffentlichungsnummer WO | | |
| 22 | Anmeldetag DE (Wirksamer Anmeldetag DE) | | |
| 96 | Anmeldetag EP (Wirksamer Anmeldetag EP) | | |
| 86 | Anmeldetag WO (Wirksamer Anmeldetag PCT) | | |
| 71,73 | Anmelder/Inhaber (Name, Sitz und Länderkürzel des aktuellen Anmelders/Inhabers) | | |
| 74 | Vertreter (Name und Sitz eines Vertreters) | | |
| 54 | Bezeichnung/Titel (einer Anmeldung bzw. eines Schutzrechts) | | |
| 95 | | | Bezeichnung des Erzeugnisses |
| | Fälligkeit (Tag der nächsten fälligen Gebühr zur regelmäßigen Verlängerung/ Aufrechterhaltung eines Schutzrechts bzw. einer Patentanmeldung) | | |
| | Status (Aktueller Stand des Verfahrens eines Schutzrechts/einer Schutzrechtsanmeldung) | | |

**Marken:**

| Code | Marken |
|---|---|
| 210 | Aktenzeichen (sofern es nicht mit der Registernummer übereinstimmt) |
| 111 | Registernummer (Nummer, unter der die Marke im Register eingetragen ist) |
| 731 | Anmelder (ausschließlich bezogen auf das Anmeldeverfahren) |
| 732 | Inhaber (Angabe von Name, Wohnort/Postleitzahl/Länderkennzeichen des aktuellen Markeninhabers) |
| 740 | Vertreter (Name und Sitz des Vertreters) |
| 151 | Eintragungstag (Tag der Eintragung in das Markenregister) |
| 180 | Schutzende (Tag, an dem der Markenschutz ablaufen wird) |
| | Aktenzustand (z.B. Marke eingetragen, Marke gelöscht, ...) |
| | Bestandsart (z.B. Marke eingetragen, Schutz bewilligt, Anmeldung eingegangen, ...) |

**Designs:**

| Code | Designs |
|---|---|
| 21 | Aktenzeichen (10- oder 14-stellige Prüfnummer, die sich aus einer bestimmten Registernummer, einem Punkt und einer Prüfziffer zusammensetzt) |
| 11 | Registernummer (8- oder 12-stellige Nummer, unter der eine Designanmeldung im Register eingetragen ist) |
| 73 | Inhaber (Angabe von Name, Wohnort und Länderkennzeichen des aktuellen Inhabers eines Designs) |
| 74 | Vertreter (Name und Sitz des Vertreters) |
| 22 | Anmeldetag |
| 15 | Eintragungstag (Tag der Eintragung in das Designregister) |
| | Fälligkeit (Fälligkeitstag der nächsten Aufrechterhaltungsgebühr) |
| 180 | Schutzendedatum (Tag, an dem der Designschutz ablaufen wird) |
| | Designzustand (Aktueller Status eines Designs (z.B. Muster eingetragen, ...) |

In einer besonders bevorzugten Ausgestaltung der vorliegenden Erfindung kann die variable Indexstruktur INID-Codes (*Internationally agreed Number for the Identification of (bibliographic) Data)* berücksichtigen, insbesondere auf diese zurückgreifen. Für die Kennzeichnung bibliographischer Daten von Patenten, Gebrauchsmustern und ergänzenden Schutzzertifikaten einschließlich der dazugehörigen Anmeldungen ist der WIPO-Standard ST.9 heranzuziehen. Analoge INID-Codes sind für eingetragene Designs (WIPO-Standard ST.80) und Marken (WIPO-Standard ST.60) entwickelt worden.

Die variable Indexstruktur umfasst vorzugsweise mindestens einen INID-Code, wie den INID-Code für das Aktenzeichen und optional den INID-Code für den Anmeldetag. Besonders bevorzugt umfasst das Abfragen der Registerdaten und das Entnehmen von Informationen sowie die Übermittlung der Informationen die Fälligkeit für das mindestens eine Schutzrecht oder das Schutzende oder Schutzendedatum. Vorliegend wird das Schutzende oder Schutzendedatum als Frist für die Bezahlung der Aufrechterhaltungsgebühren definiert.

Gegenstand der Erfindung ist ein Computer-implementiertes Verfahren zur fristgerechten Bezahlung von Aufrechterhaltungsgebühren für gewerbliche Schutzrechte für einen Anwender, insbesondere mittels einer Anwendungssoftware, bevorzugt als Abfolge von durch einen Computer ausführbaren Anweisungen, wobei das Verfahren die Schritte umfasst:
I) Abfragen von Registerdaten zu mindestens einem gewerblichen Schutzrecht, insbesondere des Anwenders, wobei die Registerdaten bei mindestens einer offiziellen Datenbank unter Verwendung einer variablen Indexstruktur abgefragt werden, und/oder
II) Entnehmen von Informationen betreffend die Aufrechterhaltung des mindestens einen gewerblichen Schutzrechts aus den Registerdaten, und/oder
III) Übermitteln der Informationen an den Anwender und Bereitstellen einer Reihe von Zahlungsmöglichkeiten zur Bezahlung der Aufrechterhaltungsgebühren für das mindestens eine gewerbliche Schutzrecht, und/oder
IV) Erhalten einer Auswahl des Anwenders aus der Reihe von Zahlungsmöglichkeiten, und/oder
V) Anweisen der Zahlung der Aufrechterhaltungsgebühren für das mindestens eine gewerbliche Schutzrecht und optional Übermitteln einer Zahlungsbestätigung an den Anwender.

Nach einer bevorzugten Alternative kann in dem Verfahren vor der I) Abfrage in dem Verfahren ein individueller Schlüssel und optional eine Aufstellung umfassend das mindestens eine Schutzrecht an mindestens eine offizielle Datenbank geschickt werden, wobei die Datenbank vorzugsweise diesen Schlüssel mit dem mindestens einem Schutzrecht aus der Aufstellung in der offiziellen Datenbank verknüpft.

Alternativ oder Zusätzlich wird vor der i) Abfrage ein individueller Schlüssel von der offiziellen Datenbank für die I) Abfrage bereitgestellt. Besonders bevorzugt kann dieser individuelle Schlüssel, der an die offizielle Datenbank geschickt wurde und/oder der von der offiziellen Datenbank bereitgestellt wird mit der V) Anweisung der Zahlung der Aufrechterhaltungsgebühr für das mindestens eine Schutzrecht verknüpft werden und vorzugsweise übermittelt werden.

Besonders bevorzugt kann dieser individuelle Schlüssel, der an die offizielle Datenbank geschickt wurde und/oder der von der offiziellen Datenbank bereitgestellt wird mit der V) Übermittlung der Zahlungsbestätigung der Zahlung der Aufrechterhaltungsgebühr für das mindestens eine Schutzrecht verknüpft werden und vorzugsweise übermittelt werden.

Dabei ist es weiter bevorzugt, wenn nach Übermittlung der Zahlungsbestätigung die Fälligkeit, Frist oder Nachfrist, insbesondere in der nicht-offiziellen Datenbank, auf die nächste Fälligkeit, nächste Frist oder nächste Nachfrist vorgeschlagen wird oder gesetzt wird.

Der individuelle Schlüssel, der an die offizielle Datenbank geschickt wurde und/oder der von der offiziellen Datenbank bereitgestellt wird, ermöglicht i) eine automatische Erkennung des mindestens einen gewerblichen Schutzrechtes und optional die Zuordnung zum Anwender oder ii) eine automatische Erkennung des Anwenders und optional des mindestens einen gewerblichen Schutzrechtes. Alternativ oder zusätzlich ermöglicht der individuelle Schlüssel eine automatische Erkennung in einem Empfängersystem der mindestens einen offiziellen Datenbank die Erkennung der Zahlung der Aufrechterhaltungsgebühr des mindestens einen Schutzrechtes und die Verarbeitung der Zahlung der Aufrechterhaltungsgebühr des mindestens einen Schutzrechtes und optional die Ausstellung und Übermittlung einer Zahlungsbestätigung der Aufrechterhaltungsgebühr des mindestens eine Schutzrechtes, insbesondere an den Anwender.

Besonders bevorzugt umfasst die Zahlungsbestätigung die Information, ob die Zahlung zur Zahlung der Aufrechterhaltungsgebühr des mindestens einen Schutzrechtes von der offiziellen Datenbank als richtig oder unrichtig ausgewiesen wird.

Und optional VI) ein bis mehrfaches Abfragen von Registerdaten zu mindestens einem gewerblichen Schutzrecht eines Anwenders, wobei die Registerdaten bei mindestens einer offiziellen Datenbank unter Verwendung einer variablen Indexstruktur abgefragt werden, und optional
VII) Entnehmen von Informationen betreffend die Aufrechterhaltung des mindestens einen gewerblichen Schutzrechts aus den Registerdaten, und
VIII) a) Vergleichen der Registerdaten aus I) und der Registerdaten aus VI) und/oder
   b) Vergleichen der Informationen aus II) mit den Informationen aus VII) und Feststellen von Änderungen in den Abgefragten Registerdaten, insbesondere gegenüber dem abgefragten Registerdaten aus Schritt I) und VI), und/oder der entnommenen Informationen, insbesondere der Informationen aus II) und VII) oder
   c) Vergleich der Informationen, insbesondere aus VII), mit einer Berechnung der nächsten Fälligkeit der Aufrechterhaltungsgebühren für das mindestens eine Schutzrecht, insbesondere der nächsten Fälligkeit der Aufrechterhaltungsgebühren, der nächsten Frist der Aufrechterhaltungsgebühren und/oder der nächsten Nachfrist zur Zahlung der Aufrechterhaltungsgebühren,
IX) Beurteilung der Informationen betreffend die Aufrechterhaltung des mindestens einen Schutzrechtes und Feststellen, dass i) die Informationen betreffend die Aufrechterhaltung des mindestens einen Schutzrechtes die nächste Fälligkeit, die nächste Frist und/oder die nächste Nachfrist zur Zahlung der Aufrechterhaltungsgebühren entsprechen, oder ii) die Informationen betreffend die Aufrechterhaltung des mindestens einen Schutzrechtes die nächste Fälligkeit, die nächste Frist und/oder die nächste Nachfrist zur Zahlung der Aufrechterhaltungsgebühren nicht entsprechen,
   wenn i) zutrifft,
X) Übermitteln der Informationen aus VIII) und/oder des Vergleichs für das mindestens eine gewerbliche Schutzrecht aus VIII) an den Anwender,
IX) Speichern der Informationen aus VIII) in der nicht-offiziellen Datenbank und optional
XI) i) Übermitteln einer Mitteilung an den Anwender enthaltend die nächste Fälligkeit, nächste Frist der Aufrechterhaltungsgebühren und/oder der nächsten Nachfrist zur Zahlung der Aufrechterhaltungsgebühren des mindestens einen Schutzrechtes, und/oder
   ii) Erstellen eines elektronischen Dokumentes, insbesondere fälschungssicheren Dokumentes, und optional Speichern des Dokumentes in der nicht-offiziellen Datenbank, und/oder
   iii) Vornehmen einer visuellen Markierung des mindestens einen Schutzrechtes, insbesondere einer farblichen Markierung des mindestens einen Schutzrechtes zur Visualisierung der nächsten Fälligkeit, nächsten Frist und/oder nächsten Nachfälligkeit, oder Änderung einer visuellen Markierung des mindestens einen Schutzrechtes, insbesondere einer farblichen Markierung des mindestens einen Schutzrechtes zur Visualisierung der nächsten Fälligkeit, nächsten Frist und/oder nächsten Nachfälligkeit, und/oder
   iv) automatische Sortierung des mindestens einen Schutzrechtes nach der Fälligkeit, Frist oder Nachfälligkeit, wobei insbesondere in iv) über mehrere Schutzrechte Fälligkeiten und nächste Fälligkeiten, Fristen und nächste Fristen oder Nachfristen und nächste Nachfristen von mehreren Schutzrechen jeweils unabhängig nach deren Datumsangaben aufsteigend oder absteigend sortiert werden.

Wenn IX) ii) zutrifft, wiederholen von VI), VII), VIII) und IX) bis IX) i) zutrifft und/oder, wenn IX) i) innerhalb eines definierten Zeitraumes vor Ablauf der Nachfrist nicht zutrifft Auslösen einer Warnnachricht an den Anwender und optional einen Dritten.

Der definierte Zeitraum vor Ablauf der Nachfrist umfasst vorzugsweise mindestens 30 Tage, zweckmäßig 20 Tage, vorzugsweise mindestens 5 Tage. Alternativ kann der Zeitraum einen Tag umfassen. Das computer-implementierte Verfahren kann so eingestellt sein, dass automatisch innerhalb eines definierten Zeitraumes vor Ablauf der Nachfrist, wenn IX) i) nicht zutrifft eine Anweisung der Zahlung der Aufrechterhaltungsgebühren für das mindestens eine Schutzrecht basierend auf den Gebühren innerhalb der Nachfrist ausgelöst wird. Und optional Auslösen einer Warnnachricht an den Anwender und optional einen Dritten.

Die Abfragen VI) mit den folgenden Schritten VII), VIII) und IX) werden vorzugsweise nach einer festgelegten zeitlichen Regel, insbesondere nach Durchführung des Schrittes V), durchgeführt. Bevorzugt ist eine festgelegte zeitliche Regel nach Ablauf von mindestens fünf Tagen nach Durchführung von Schritt V) und optional Wiederholen nach einer festgelegten zeitlichen Regel bis IX) i) zutrifft. Wie vorstehend erläutert wird innerhalb eines definierten Zeitraumes vor Ablauf der Nachfrist eine Warnnachricht an den Anwender und optional an einen Dritten ausgelöst und/oder eine automatische Zahlung basierend auf den Gebühren innerhalb der Nachfrist ausgelöst.

Die Beurteilung kann insbesondere durch einen hinterlegten Algorithmus erfolgen. Vorzugsweise erfolgt die Beurteilung für das jeweilige mindestens eine Schutzrecht vorzugsweise durch einen Algorithmus für das jeweilige mindestens eine Schutzrecht anhand der jeweiligen gesetzlichen nationalen oder supernationalen Vorgaben, insbesondere mit der Ausnahme, dass Fristverlängerungen durch Feiertage, Schließung der Ämter oder Feiertage unberücksichtigt bleiben. Beispielsweise umfasst der Algorithmus mindestens eine der folgenden Informationen, wie Frist + 365 Tage = nächste Frist, Fälligkeit + 365 Tage = nächste Fälligkeit, Nachfrist + 365 Tage = nächste Nachfrist, insbesondere für Patentanmeldungen und Patente. Alternativ kann der Algorithmus folgende Informationen umfassen: Frist + 5 Jahre = nächste Fälligkeit bspw. für ein Design, Frist + 10 Jahre = nächste Frist für die Aufrechterhaltung einer Marke, etc. wie x + 365 Tage (Patent), + 5 Jahre (Design) oder + 10 Jahre (Marke). Überdies soll der Algorithmus vorzugsweise, beispielsweise in den USA, länderspezifische Regelungen berücksichtigen.

Die Berechnung der Fristen, nächsten Fristen, Fälligkeit, nächsten Fälligkeit, Nachfrist oder nächsten Nachfrist der Aufrechterhaltungsgebühren für das jeweilige mindestens eine Schutzrecht erfolgt vorzugsweise durch einen Algorithmus für das jeweilige mindestens eine Schutzrecht anhand der jeweiligen gesetzlichen nationalen oder supernationalen Vorgaben. Beispielsweise umfasst der Algorithmus mindestens eine der folgenden Informationen, wie Frist + 365 Tage = nächste Frist, Fälligkeit + 365 Tage = nächste Fälligkeit, Nachfrist + 365 Tage = nächste Nachfrist, insbesondere für Patentanmeldungen und Patente. Alternativ kann der Algorithmus folgende Informationen umfassen: Frist + 5 Jahre = nächste Fälligkeit bspw. für ein Design, Frist + 10 Jahre = nächste Frist für die Aufrechterhaltung einer Marke, etc. wie x + 365 Tage (Patent), + 5 Jahre (Design) oder + 10 Jahre (Marke). Überdies soll der Algorithmus vorzugsweise, beispielsweise in den USA, länderspezifische Regelungen berücksichtigen.

Als nächste Fälligkeit der Aufrechterhaltungsgebühren für das mindestens eine Schutzrecht gilt die Fälligkeit, die sich an die Fälligkeit nach Zahlung der Aufrechterhaltungsgebühren der vorausgehenden Fälligkeit, d.h. der ursprünglichen Fälligkeit anschließt. Wenn somit die dritte Jahresgebühr fällig war, entspricht die nächste Fälligkeit der Fälligkeit der vierten Jahresgebühr. Analoges gilt für Markenverlängerungen um weitere 10 Jahre, Verlängerungen von Designs um 5 Jahre etc. Als nächste Frist der Aufrechterhaltungsgebühren gilt somit auch die auf die Frist folgende Frist nach Zahlung der Aufrechterhaltungsgebühren. Als nächste Nachfrist zur Zahlung der Aufrechterhaltungsgebühren gilt jeweils die auf die Nachfirst folgende Nachfrist nach Zahlung der Aufrechterhaltungsgebühren.

Bevorzugt umfasst die V) Anweisen der Zahlung der Aufrechterhaltungsgebühren für das mindestens eine gewerbliche Schutzrecht eine Mehrfaktorauthentifizierung des Anwenders. Die Mehrfaktorauthentifizierung kann umfassen ein Passwort, einen Code, der an eine Telefonnummer übermittelt wird und in dem Verfahren vom Anwender eingegeben werden muss oder E-Mail Bestätigungslink, der vom Anwender bestätigt werden muss. Besonders bevorzugt findet das computer-implementierte Verfahren unter Nutzung von Verschlüsselungen, dynamischen veränderlichen Schlüsseln und/oder in einem VPN-Netzwerk statt (VPN virtuell private network), insbesondere in einem SSL-VPN einem verschlüsselten VPN Netzwerk statt.

In einer Ausführungsform des erfindungsgemäßen Verfahrens umfassen die in Schritt I) abgefragten Registerdaten zumindest die Fälligkeit der Aufrechterhaltungsgebühren für das mindestens eine gewerbliche Schutzrecht. Weiterhin können die in Schritt I) abgefragten Registerdaten das Schutzende und/oder den Status bzw. die Zustand umfassen.

In einer weiteren Ausführungsform des erfindungsgemäßen Verfahrens umfasst Schritt I) ferner: Überprüfen von Identifikationsdaten des mindestens einen gewerblichen Schutzrechts, insbesondere umfassend mindestens eine dem mindestens einen gewerblichen Schutzrecht zugeordnete Nummer und/oder Person. Hierunter fallen insbesondere Aktenzeichen, Anmeldenummer, Veröffentlichungsnummer, Eintragungsnummer, Registernummer und/oder Anmelder, Inhaber, Vertreter. Die Identifikationsdaten können jeweils einzeln oder in Kombination abgefragt werden. Als Person gilt insbesondere eine natürliche oder juristische Person oder nach dem jeweiligen Recht rechtliches Subjekt, das Anmelder oder Inhaber von Schutzrechten sein kann.

In einer bevorzugten Ausführungsform des erfindungsgemäßen Verfahrens umfasst Schritt I) ferner: Erstellen eines elektronischen Dokumentes, insbesondere eines fälschungssicheren Dokuments, umfassend einen Registerauszug aus der offiziellen Datenbank zu dem mindestens einen gewerblichen Schutzrecht. Ein solches Dokument kann beispielsweise eine sogenannte qualifizierte elektronische Signatur aufweisen. Der Registerauszug in Form des elektronischen fälschungssicheren Dokuments kann bei jeder Abfrage erstellt werden. Der Registerauszug in Form des elektronischen fälschungssicheren Dokuments kann vorzugsweise zu Beginn und/oder am Ende des erfindungsgemäßen Verfahrens gezogen werden. Mit diesem kann der jeweils aktuelle Verfahrensstand belegt werden.

In einer Ausführungsform des erfindungsgemäßen Verfahrens umfassen die in Schritt II) entnommenen Informationen zumindest die Frist und optional die Nachfrist zur Zahlung der Aufrechterhaltungsgebühren für das mindestens eine gewerbliche Schutzrecht und vorzugsweise die Höhe der Aufrechterhaltungsgebühren optional inklusive Zuschlagsgebühr. Dabei werden die jeweils individuellen Gegebenheiten zur Berechnung der Frist und/oder Nachfrist mit einbezogen.

In einer weiter bevorzugten Ausführungsform des erfindungsgemäßen Verfahrens erfolgt in Schritt I) und/oder Schritt II) ferner ein Speichern der Registerdaten und/oder Informationen in einer nicht-offiziellen Datenbank, insbesondere in einer eigenen Datenbank, wobei vorzugsweise die Registerdaten und/oder Informationen mit zuvor gespeicherten Registerdaten und/oder Informationen zu dem mindestens einen gewerblichen Schutzrecht abgeglichen werden.

In einer Ausführungsform des erfindungsgemäßen Verfahren umfassen die in Schritt III) bereitgestellten Zahlungsmöglichkeiten eine sofortige Bezahlung, eine fristgerecht terminierte Bezahlung und/oder eine Bezahlung innerhalb der Nachfrist. Der Anwender hat demensprechend die Wahl, ob er innerhalb der regulären Frist oder innerhalb der Nachfrist bezahlen möchte. Die jeweilige Höhe der angegebenen Aufrechterhaltungsgebühren ist daran anzupassen.

In einer besonders bevorzugten Ausführungsform des erfindungsgemäßen Verfahrens werden die Schritte I) und II) und optional die Schritte III), IV) und V) zur Feststellung von Änderungen in den abgefragten Registerdaten und/oder entnommenen Informationen wiederholt in definierten Zeitintervallen oder regelmäßig, insbesondere jährlich, fünfjährlich oder zehnjährlich, wiederholt. Das Wiederholungsintervall hängt von den jeweiligen länder- und schutzrechtspezifischen Gegebenheiten ab. Diese sind vorzugsweise in dem, dem erfindungsgemäßen Verfahren zugrundliegenden Algorithmus, abgelegt.

Die variable Indexstruktur dient der Suche eines Eintrags in einer Datenbank und die Art und Weise, wie der Computer den Suchvorgang durchführt. In einer weiteren Ausführungsform des erfindungsgemäßen Verfahrens wird die variable Indexstruktur bei jedem Abfragen von Registerdaten verifiziert. Demgemäß findet eine Überprüfung insoweit statt, dass die Positionierung der jeweils erforderlichen Registerdaten in den betreffenden Registern bestätigt wird. Hat sich die Positionierung der erforderlichen Registerdaten, insbesondere wesentlich, verändert, wird die variable Indexstruktur entsprechend angepasst. Dadurch ist das erfindungsgemäße Verfahren lernfähig.

In einer weiter bevorzugten Ausführungsform des erfindungsgemäßen Verfahrens umfasst die variable Indexstruktur Hashtabellen und/oder Baum-Strukturen. Das Hashverfahren ist ein Algorithmus zum Suchen von Datenobjekten in großen Datenmengen. Es basiert auf der Idee, dass eine mathematische Funktion, die Hashfunktion, die Position eines Objektes in einer Tabelle berechnet. Dadurch erübrigt sich das Durchsuchen vieler Datenobjekte, bis das Zielobjekt gefunden wurde. Bei Baumstrukturen können ausgehend von der Wurzel mehrere gleichartige Objekte miteinander verkettet werden, sodass die lineare Struktur der Liste aufgebrochen wird und eine Verzweigung stattfindet. Dadurch wird die Durchsuchung einer Datenmenge ebenfalls beschleunigt.

Ein weiterer Gegenstand der vorliegenden Erfindung ist ein System zur Ausführung der Schritte des erfindungsgemäßen Computer-implementierten Verfahrens zur fristgerechten Bezahlung von Aufrechterhaltungsgebühren für gewerbliche Schutzrechte durch einen Anwender, umfassend:
A) einen Server, wobei der Server dazu ausgelegt ist
   - Registerdaten zu mindestens einem gewerblichen Schutzrecht eines Anwenders bei mindestens einer offiziellen Datenbank unter Verwendung einer variablen Indexstruktur abzufragen, und/oder
   - Informationen betreffend die Aufrechterhaltung des mindestens einen gewerblichen Schutzrechts aus den Registerdaten zu entnehmen und an den Anwender zu übermitteln, und/oder
   - eine Reihe von Zahlungsmöglichkeiten zur Bezahlung der Aufrechterhaltungsgebühren für das mindestens eine gewerbliche Schutzrecht bereitzustellen, und/oder
   - eine Auswahl des Anwenders aus der Reihe von Zahlungsmöglichkeiten zu erhalten,
   - die Zahlung der Aufrechterhaltungsgebühren für das mindestens eine gewerblich Schutzrecht anzuweisen,
   - und optional eine Zahlungsbestätigung an den Anmelder zu übermitteln,
      und/oder
B) ein Gerät, insbesondere Handgerät, bevorzugt ein Handgerät in Form eines Computers, insbesondere eines Anwenders, wobei das Gerät dazu ausgelegt ist, eine Anwendung zur Kommunikation mit dem Server, insbesondere zum Erhalten von Informationen betreffend die Aufrechterhaltung des mindestens einen gewerblichen Schutzrechts und zur Auswahl mindestens einer Zahlungsmöglichkeit aus der Reihe von Zahlungsmöglichkeiten zur Bezahlung der Aufrechterhaltungsgebühren für das mindestens eine gewerbliche Schutzrecht, auszuführen.

In einer bevorzugten Ausführungsform des erfindungsgemäßen Systems umfasst der A) Server einen Speicher zum Speichern der Registerdaten und/oder Informationen in einer nicht-offiziellen Datenbank, um vorzugsweise die Registerdaten und/oder Informationen mit zuvor gespeicherten Registerdaten und/oder Informationen zu dem mindestens einen gewerblichen Schutzrecht abzugleichen.

In einer besonders bevorzugten Ausführungsform des erfindungsgemäßen Systems ist der A) ferner dazu ausgelegt, eine variable Indexstruktur, insbesondere umfassend Hashtabellen und/oder Baum-Strukturen, zum Abfragen von Registerdaten zu verwenden, wobei vorzugsweise die variable Indexstruktur bei jedem Abfragen der Registerdaten verifiziert wird.

In einer ebenfalls besonders bevorzugten Ausführungsform des erfindungsgemäßen Systems ist das B) Gerät, insbesondere des Anwenders, ein Smartphone oder ein Tabletcomputer. Dabei hat der Anwender vorzugsweise über eine Anwendung (Applikation, App) die Möglichkeit mit dem Server in Kontakt zu treten.

Gleichfalls Gegenstand der Erfindung ist ein Computerprogrammprodukt, umfassend Befehle, die bei Ausführung des Programms durch einen Computer diesen veranlassen, die Schritte des erfindungsgemäßen Computer-implementierten Verfahrens auszuführen.

Die erfindungsgemäße Lösung kann vorzugsweise mithilfe einer Blockchain realisiert werden. Eine Blockchain ist eine kontinuierlich erweiterbare Liste von Datensätzen in einzelnen Blöcken. Neue Blöcke werden nach einem Konsensverfahren erstellt und mittels kryptographischer Verfahren an eine bestehende Kette angehängt. Jeder Block enthält dabei typischerweise einen kryptographisch sicheren Hash (Streuwert) des vorhergehenden Blocks, einen Zeitstempel und Transaktionsdaten. Dementsprechend können die im erfindungsgemäßen Verfahren verwendeten Registerdaten, Informationen und Transaktionsdaten in vorteilhafter Weise manipulationssicher abgelegt werden.

Die Erfindung wird anhand der Figuren näher erläutert, ohne die Erfindung auf diese Ausführungsbeispiele zu begrenzen. Es zeigen:
Die Erfindung wird anhand der Figuren näher erläutert, ohne die Erfindung auf diese Ausführungsbeispiele zu begrenzen. Es zeigen:
- **Fig. 1**:: einen Verfahrensablauf des erfindungsgemäßen Verfahrens
- **Fig. 2**:: einen graphische Zusammenstellung der an dem erfindungsgemäßen Verfahren beteiligten Teilnehmer und ihrer Interaktionen

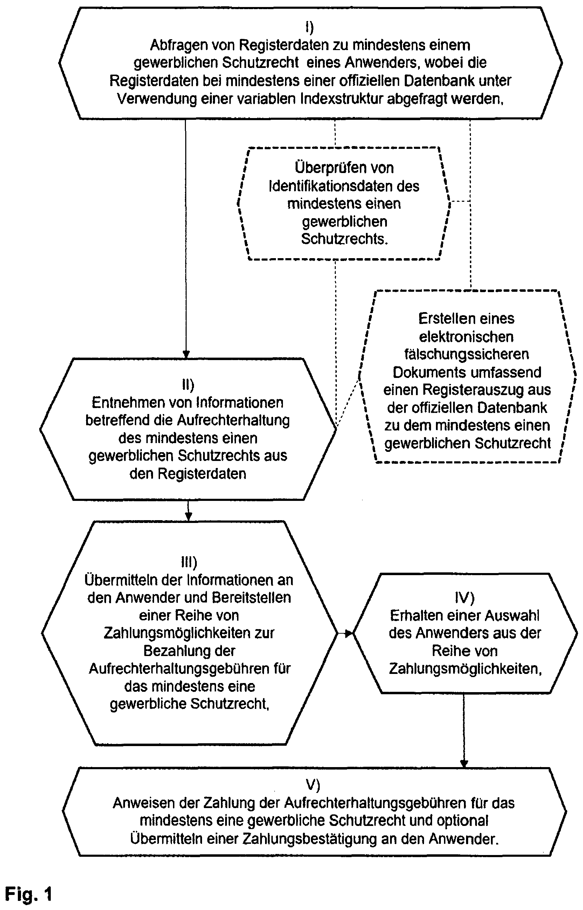

**Figur 1** zeigt die Verfahrensschritte **I)** bis V) des erfindungsgemäßen Computer-implementierten Verfahrens zur fristgerechten Bezahlung von Aufrechterhaltungsgebühren für gewerbliche Schutzrechte durch einen Anwender.
I) Hier erfolgt zunächst ein Abfragen von Registerdaten zu einem gewerblichen Schutzrecht, wie einem Markenrecht, des Anwenders bei einer offiziellen Datenbank wie etwa der des Deutschen Patent- und Markenamts (DPMA). Ziel ist es, zumindest die Fälligkeit der Aufrechterhaltungsgebühren für das gewerbliche Schutzrecht zu erhalten, beispielsweise durch Abfrage des Datums des Schutzablaufs des betreffenden Markenrechts. Die Abfrage erfolgt dabei unter Verwendung einer variablen Indexstruktur, welche an die Anforderungen der jeweiligen Datenbank angepasst ist. So können verschiedenste Datenbanken der Patentund Markenämter weltweit zielgerichtet abgefragt werden. Optional kann ferner eine Überprüfung von Identifikationsdaten des gewerblichen Schutzrechts stattfinden, indem insbesondere die Anmeldenummer und/oder der Inhaber abgeglichen wird. Weiterhin kann auch der Status des gewerblichen Schutzrechts ermittelt werden. Die abgefragten Registerdaten werden vorzugsweise in einer nicht-offiziellen Datenbank gespeichert und mit zuvor zu dem gewerblichen Schutzrecht gespeicherten Registerdaten abgeglichen. Auf diese Weise kann eine Kreuzverifikation hinsichtlich der Registerdaten stattfinden. Darüber hinaus kann es in dem erfindungsgemäßen Verfahren vorgesehen sein, dass ein elektronisches fälschungssicheres Dokument umfassend einen Registerauszug aus der offiziellen Datenbank zu dem gewerblichen Schutzrecht erstellt und insbesondere in der nicht-offiziellen Datenbank abgespeichert wird.
II) Anschließend findet eine Analyse der abgefragten Registerdaten zu dem gewerblichen Schutzrecht statt. So werden aus den Registerdaten Informationen entnommen, welche in Verbindung mit der Fälligkeit der Aufrechterhaltungsgebühren für das gewerbliche Schutzrecht und optional dessen Status zumindest die Frist und/oder Nachfrist zur Zahlung der Aufrechterhaltungsgebühren für das gewerbliche Schutzrecht umfassen. Des Weiteren können die Informationen die Höhe der Aufrechterhaltungsgebühren optional inklusive Zuschlagsgebühr und/oder die Zahlungsmodalitäten, insbesondere in Bezug auf eine etwaige Vorlaufzeit, enthalten. Dies kann auch die zur Auswahl stehenden Bankverbindungen o. ä. umfassen. Vorzugsweise werden die aus den Registerdaten entnommenen Informationen in einer nicht-offiziellen Datenbank gespeichert und mit zuvor zu dem gewerblichen Schutzrecht gespeicherten Informationen abgeglichen.
   Die Schritte I) und II) des erfindungsgemäßen Verfahrens werden gegebenenfalls mehrfach wiederholt bis aufgrund einer bevorstehenden Frist und/oder Nachfrist zur Zahlung der Aufrechterhaltungsgebühren für das gewerbliche Schutzrecht eine Kommunikation mit dem Anwender erforderlich ist.
III) Im darauffolgenden Schritt findet nun die Kommunikation mit dem Anwender statt. So werden an diesen die Informationen, welche zumindest die Frist und/oder die Nachfrist zur Zahlung der Aufrechterhaltungsgebühren für das gewerbliche Schutzrecht und ferner vorzugsweise deren Höhe optional inklusive Zuschlagsgebühr, umfassen, übermittelt. Zudem wird eine Reihe von Zahlungsmöglichkeiten zur Bezahlung der Aufrechterhaltungsgebühren für das gewerbliche Schutzrecht bereitgestellt. Die Zahlungsmöglichkeiten können sowohl eine sofortige Bezahlung als auch eine fristgerechte, aber terminierte Bezahlung oder eine Bezahlung innerhalb der Nachfrist umfassen. Sofern der Anwender die letztgenannte Möglichkeit auswählt, sollte eine Alarmnotiz übermittelt werden, welche auf die auftretenden Zuschlagsgebühren hinweist. Darüber hinaus umfassen die Zahlungsmöglichkeiten verschiedene Zahlungsmittel, die dem Anwender, insbesondere auf Basis eines ihm zugeordneten Kreditrisikos, zur Verfügung gestellt werden.
**IV)** Nachdem der Anwender sich für eine Zahlungsmöglichkeit sowie ein entsprechendes Zahlungsmittel, vorzugsweise mittels einer 1-Klick-Auswahl, entschieden hat, erfolgt ein Erhalten der Auswahl des Anwenders aus der Reihen von Zahlungsmöglichkeiten. Dies entspricht einer Beauftragung zur Anweisung der Zahlung der Aufrechterhaltungsgebühren für das gewerbliche Schutzrecht. Hierbei ist zu unterscheiden zwischen einer Beauftragung zur sofortigen Zahlung, einer Beauftragung zu einer fristgerechten terminierten Bezahlung oder einer Beauftragung zur Bezahlung innerhalb der Nachfrist. Letzteres sollte der Anmelder zusätzlich bestätigen müssen, so dass neben dem Erhalten der Auswahl des Anwenders aus der Reihe von Zahlungsmöglichkeiten auch ein Erhalten der Bestätigung der Auswahl des Anwenders aus der Reihe von Zahlungsmöglichkeiten erfolgt.
V) Im letzten Schritt wird schließlich die Zahlung der Aufrechterhaltungsgebühren für das gewerbliche Schutzrecht angewiesen. Dies kann durch direkte Zahlung an die zuständige Stelle des entsprechenden Patent- und Markenamtes oder aber durch Beauftragung eines Zahlungsdienstleisters erfolgen. Sobald die Zahlung und damit die Aufrechterhaltung, insbesondere durch Änderung des betreffenden Registereintrags, bestätigt wurde, kann die zugehörige Frist gestrichen und weiternotiert werden. Optional kann an den Anwender eine Zahlungsbestätigung übermittelt werden.

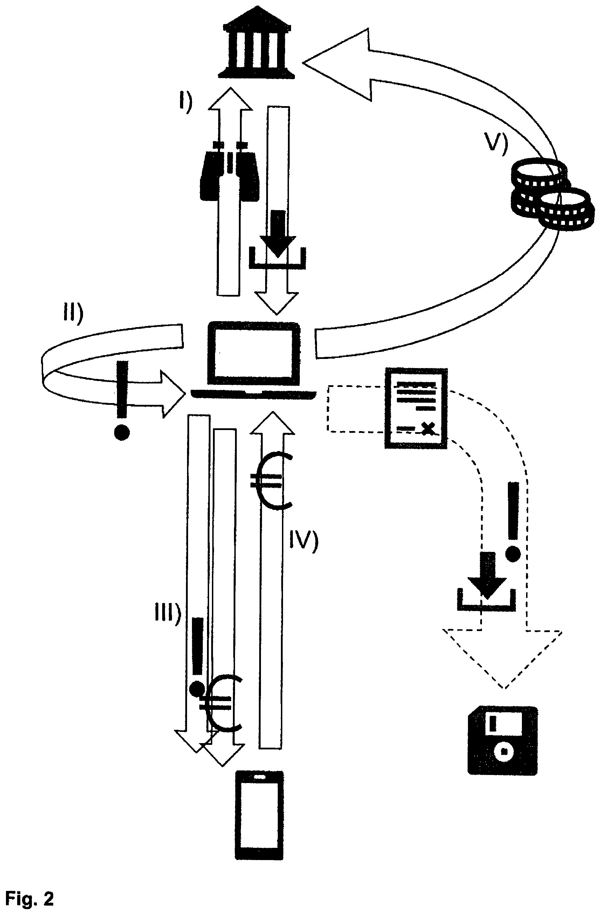

**Figur 2** zeigt das erfindungsgemäße System zur Ausführung der Schritte des erfindungsgemäßen Computer-implementierten Verfahrens zur fristgerechten Bezahlung von Aufrechterhaltungsgebühren für gewerbliche Schutzrechte durch einen Anwender.

Das System umfasst zunächst einen Server, welcher, insbesondere über ein Netzwerk, mit den offiziellen Datenbanken der Patent- und Markenämter sowie mit einem entsprechenden Gerät des Anwenders in Verbindung steht. Der Server ist dazu ausgelegt, Registerdaten, insbesondere umfassend die Fälligkeit der Aufrechterhaltungsgebühren, zu einem gewerblichen Schutzrecht des Anwenders bei mindestens einer offiziellen Datenbank, vorzugsweise bei einem Patent- und/oder Markenamt, unter Verwendung einer variablen Indexstruktur abzufragen I), Informationen betreffend die Aufrechterhaltung des gewerblichen Schutzrechts, insbesondere die Frist und/oder Nachfrist zur Zahlung der Aufrechterhaltungsgebühren für das mindestens eine Schutzrecht, aus den Registerdaten zu entnehmen II) und an den Anwender zu übermitteln sowie eine Reihe von Zahlungsmöglichkeiten zur Bezahlung der Aufrechterhaltungsgebühren für das mindestens eine gewerbliche Schutzrecht bereitzustellen III). Ferner ist der Server dazu ausgelegt eine Auswahl des Anwenders aus der Reihe von Zahlungsmöglichkeiten zu erhalten IV) und die Zahlung der Aufrechterhaltungsgebühren für das gewerbliche Schutzrecht anzuweisen V). Der Server kann zudem dazu ausgelegt sein, eine Zahlungsbestätigung an den Anmelder zu übermitteln. Vorzugsweise ist der Server darüber hinaus dazu ausgelegt, auf einen Speicher, insbesondere in Form einer nicht-offiziellen Datenbank, die mittels Indexstrukturen durchsuchbar ist, zuzugreifen, um die Registerdaten und/oder Informationen zu dem gewerblichen Schutzrecht abzuspeichern und mit zuvor abgespeicherten Registerdaten und/oder Informationen abzugleichen. Besonders bevorzugt ist der Server zudem dazu ausgelegt, ein elektronisches fälschungssicheres Dokument umfassend einen Registerauszug aus der offiziellen Datenbank zu dem gewerblichen Schutzrecht zu erstellen und in dem Speicher abzulegen.

Daneben umfasst das System eine Gerät, insbesondere Handgerät, vorzugsweise ein Smartphone oder einen Table-Computer, des Anwenders, welcher, insbesondere über ein Netzwerk, mit dem Server in Verbindung steht. Das Gerät ist dazu ausgelegt, Informationen betreffend die Aufrechterhaltung des gewerblichen Schutzrechts, insbesondere die Frist und/oder Nachfrist zur Zahlung der Aufrechterhaltungsgebühren für das mindestens eine Schutzrecht, sowie eine Reihe von Zahlungsmöglichkeiten zur Bezahlung der Aufrechterhaltungsgebühren für das mindestens eine gewerbliche Schutzrecht zu erhalten III). Ferner ist das Gerät dazu ausgelegt eine Auswahl aus der Reihe von Zahlungsmöglichkeiten zu treffen und an den Server zu übermitteln IV). Vorzugsweise ist das Gerät dazu ausgelegt, eine Anwendung zur Kommunikation mit dem Server, insbesondere zum Erhalten von Informationen betreffend die Aufrechterhaltung des gewerblichen Schutzrechts und zur Auswahl mindestens einer Zahlungsmöglichkeit aus der Reihe von Zahlungsmöglichkeiten zur Bezahlung der Aufrechterhaltungsgebühren für das gewerbliche Schutzrecht, auszuführen.

## Patentansprüche

1. Computer-implementiertes Verfahren, insbesondere zur fristgerechten Bezahlung von Aufrechterhaltungsgebühren für gewerbliche Schutzrechte für einen Anwender,
**dadurch gekennzeichnet, dass** das Verfahren die Schritte umfasst:
I) Abfragen von Registerdaten zu mindestens einem gewerblichen Schutzrecht, insbesondere eines Anwenders, wobei die Registerdaten bei mindestens einer offiziellen Datenbank unter Verwendung einer variablen Indexstruktur abgefragt werden,
II) Entnehmen von Informationen betreffend die Aufrechterhaltung des mindestens einen gewerblichen Schutzrechts aus den Registerdaten,
III) Übermitteln der Informationen an den Anwender und Bereitstellen einer Reihe von Zahlungsmöglichkeiten zur Bezahlung der Aufrechterhaltungsgebühren für das mindestens eine gewerbliche Schutzrecht,
IV) Erhalten einer Auswahl des Anwenders aus der Reihe von Zahlungsmöglichkeiten,
V) Anweisen der Zahlung der Aufrechterhaltungsgebühren für das mindestens eine gewerbliche Schutzrecht und optional Übermitteln einer Zahlungsbestätigung an den Anwender.

2. Computer-implementiertes Verfahren nach Anspruch 1, **dadurch gekennzeichnet, dass** die in Schritt I) abgefragten Registerdaten zumindest die Fälligkeit der Aufrechterhaltungsgebühren für das mindestens eine gewerbliche Schutzrecht umfassen.

3. Computer-implementiertes Verfahren nach Anspruch 1 oder 2, **dadurch gekennzeichnet, dass** Schritt I) ferner umfasst:
Überprüfen von Identifikationsdaten des mindestens einen gewerblichen Schutzrechts, insbesondere umfassend mindestens eine dem mindestens einen gewerblichen Schutzrecht zugeordnete Nummer und/oder Person.

4. Computer-implementiertes Verfahren nach einem der Ansprüche 1 bis 3, **dadurch gekennzeichnet, dass** Schritt I) ferner umfasst:
Erstellen eines elektronischen fälschungssicheren Dokuments umfassend einen Registerauszug aus der offiziellen Datenbank zu dem mindestens einen gewerblichen Schutzrecht.

5. Computer-implementiertes Verfahren nach einem der Ansprüche 1 bis 4, **dadurch gekennzeichnet, dass** die in Schritt II) entnommenen Informationen zumindest die Frist und optional die Nachfrist zur Zahlung der Aufrechterhaltungsgebühren für das mindestens eine gewerbliche Schutzrecht und vorzugsweise die Höhe der Aufrechterhaltungsgebühren optional inklusive Zuschlagsgebühr umfassen.

6. Computer-implementiertes Verfahren nach einem der Ansprüche 1 bis 5, **dadurch gekennzeichnet, dass** in Schritt I) und/oder Schritt II) femer ein Speichern der Registerdaten und/oder Informationen in einer nicht-offiziellen Datenbank erfolgt, wobei vorzugsweise die Registerdaten und/oder Informationen mit zuvor gespeicherten Registerdaten und/oder Informationen zu dem mindestens einen gewerblichen Schutzrecht abgeglichen werden.

7. Computer-implementiertes Verfahren nach einem der Ansprüche 1 bis 6, **dadurch gekennzeichnet, dass** die in Schritt III) bereitgestellten Zahlungsmöglichkeiten eine sofortige Bezahlung, eine fristgerecht terminierte Bezahlung und/oder eine Bezahlung innerhalb der Nachfrist umfassen.

8. Computer-implementiertes Verfahren nach einem der Ansprüche 1 bis 7, **dadurch gekennzeichnet, dass** die Schritte I) und II) und optional die Schritte III), IV) und V) zur Feststellung von Änderungen in den abgefragten Registerdaten und/oder entnommenen Informationen regelmäßig, insbesondere jährlich, fünfjährlich oder zehnjährlich, wiederholt werden.

9. Computer-implementiertes Verfahren nach einem der Ansprüche 1 bis 8, **dadurch gekennzeichnet, dass** die variable Indexstruktur bei jedem Abfragen von Registerdaten verifiziert wird.

10. Computer-implementiertes Verfahren nach einem der Ansprüche 1 bis 9, **dadurch gekennzeichnet, dass** die variable Indexstruktur Hashtabellen und/oder BaumStrukturen umfasst.

11. System zur Ausführung der Schritte des Computer-implementierten Verfahrens nach einem der Ansprüche 1 bis 10, insbesondere zur fristgerechten Bezahlung von Aufrechterhaltungsgebühren für gewerbliche Schutzrechte für einen Anwender, **dadurch gekennzeichnet, dass** das System umfasst:
A) einen Server, wobei der Server dazu ausgelegt ist
- Registerdaten zu mindestens einem gewerblichen Schutzrecht, insbesondere eines Anwenders, bei mindestens einer offiziellen Datenbank unter Verwendung einer variablen Indexstruktur abzufragen,
- Informationen betreffend die Aufrechterhaltung des mindestens einen gewerblichen Schutzrechts aus den Registerdaten zu entnehmen und an den Anwender zu übermitteln,
- eine Reihe von Zahlungsmöglichkeiten zur Bezahlung der Aufrechterhaltungsgebühren für das mindestens eine gewerbliche Schutzrecht bereitzustellen und eine Auswahl des Anwenders aus der Reihe von Zahlungsmöglichkeiten zu erhalten,
- die Zahlung der Aufrechterhaltungsgebühren für das mindestens eine gewerblich Schutzrecht anzuweisen und optional eine Zahlungsbestätigung an den Anmelder zu übermitteln.
B) ein Gerät, insbesondere Handgerät, insbesondere eines Anwenders, wobei das Gerät dazu ausgelegt ist, eine Anwendung zur Kommunikation mit dem Server, insbesondere zum Erhalten von Informationen betreffend die Aufrechterhaltung des mindestens einen gewerblichen Schutzrechts und zur Auswahl mindestens einer Zahlungsmöglichkeit aus der Reihe von Zahlungsmöglichkeiten zur Bezahlung der Aufrechterhaltungsgebühren für das mindestens eine gewerbliche Schutzrecht, auszuführen.

12. System nach Anspruch 11, **dadurch gekennzeichnet, dass**
der A) Server einen Speicher zum Speichern der Registerdaten und/oder Informationen in einer nicht-offiziellen Datenbank umfasst, um vorzugsweise die Registerdaten und/oder Informationen mit zuvor gespeicherten Registerdaten und/oder Informationen zu dem mindestens einen gewerblichen Schutzrecht abzugleichen.

13. System nach Anspruch 11 oder 12, **dadurch gekennzeichnet, dass** der A) Server ferner dazu ausgelegt ist
eine variable Indexstruktur, insbesondere umfassend Hashtabellen und/oder BaumStrukturen, zum Abfragen von Registerdaten zu verwenden, wobei vorzugsweise die variable Indexstruktur bei jedem Abfragen der Registerdaten verifiziert wird.

14. System nach einem der Ansprüche 11 bis 13, **dadurch gekennzeichnet, dass** das B) Gerät des Anwenders ein Smartphone oder ein Tabletcomputer ist.

15. Computerprogrammprodukt, umfassend Befehle, die bei Ausführung des Programms durch einen Computer diesen veranlassen, die Schritte des Computer-implementierten Verfahrens nach einem der Ansprüche 1 bis 10 auszuführen.
